# EUROPEAN PATENT SPECIFICATION

(11) **EP 0 388 357 B1**
(45) Date of publication and mention of the grant of the patent: **03.11.1993**
(21) Application number: 90810175.1
(22) Date of filing: 07.03.1990
(51) Int. Cl.: D06P 3/00, D06P 1/66, D06P 1/00, G02C 7/02

(54) **Improved tinted contact lens and method of making the same**
Gefärbte Kontaktlinse und Verfahren zu ihrer Herstellung
Lentille de contact teintée et sa méthode de fabrication

(30) Priority: 14.03.1989 US 323355
(43) Date of publication of application: 19.09.1990
(73) Proprietor: CIBA-GEIGY AG, 4002 Basel (CH)
(72) Inventor: Hung, William M., Alpharetta, Giorgia 30201 (US); Su, Kai C., Alpharetta, Georgia 30201 (US)

(56) References cited:
- EP-A- 0 072 353
- FR-A- 1 242 800
- GB-A- 903 432

## Description

The present invention relates to an improvement in the tinting of contact lenses. Successful methods of tinting contact lenses are set forth in US-A-4,468,229, US-A-4,553,975 and US-A-4,559,059, all to Su.

The present invention relates to an improvement in a process for preparing a tinted contact lens. In particular, the invention concerns contact lenses comprising polymeric lens material in which reactive dyestuffs have been covalently bonded to monomer units of the polymer backbone. This invention is of particular interest in the area of so-called hydrophilic or "soft" contact lenses, commonly referred to as hydrogel lenses.

There are many known methods for tinting or coloring contact lenses. For example, a coloring agent, such as dyestuff or pigment, may be dispersed in a monomer precursor or polymer matrix. This method is typically unsuitable for use in hydrophilic contact lenses, however, because the coloring agent leaches from the plastic upon presence of water in the lens.

Another known method of coloring lenses is printing or otherwise applying the coloring agent to the lens surface. This method is also problematic, because a portion of the agent often becomes dissociated from the lens when the lens is placed in water. The primary cause of this problem is insufficient physical adhesion of the coloring agent to the surface. To counteract this problem, it is necessary to use a large amount of agent in the coloring process.

It is an object of the invention to provide an improved tinting process for the fiber reactive dyes in the contact lens tinting field.

It is another object of the invention to provide improved tinted lenses made by the aforementioned process.

Surprisingly, the bonding of a reactive dyestuff to polymeric lens material may be enhanced by providing an effective amount of an ammonium quaternary salt during the tinting process. Examples of acceptable ammonium quaternary salts include triethylbenzylammonium chloride, tetrabutylammonium hydrogen sulfate, phenyltrimethylammonium chloride, benzyltributyl ammonium chloride, tetrabutylammonium bromide, and tetramethylammonium chloride. It has been found that the use of such a catalyst results in increased bonding of the dyestuff to the lens material, which in turn decreases the cost of producing a tinted lens and also provides a lens having enhanced coloring. The present improvement has been found to be particularly useful in bonding chlorotriazine dyestuff to lens material.

According to the present invention, a process for preparing a contact lens tinted over at least a portion of its surface may be improved by the presence of a quaternary ammonium salt catalyst in the tinting solution during the tinting procedure.

The invention is therefore directed to a process for preparing a contact lens tinted over at least a portion of its surface having the steps of forming a tinting solution comprising a reactive dyestuff and applying said tinting solution to a polymeric hydrogel contact lens material, characterized in that an effective amount of a quaternary ammonium salt is added to said tinting solution before said applying step, to a contact lens produced by said process as defined in claim 11 and to a solution for use in said process comprising effective amounts of a reactive dyestuff and a quaternary ammonium salt as defined in claim 12.

It is preferred that the tinting solution has a pH of at least 10 and/or a temperature from approximately 30°C to 60°C when applied to the lens. While the raised pH is beneficial, pH alone, without the quaternary ammonium compound as required by the invention, will not achieve the improved desired results in tinting.

In a preferred embodiment said process further comprises the steps of maintaining said tinting solution at a temperature from between approximately 30° and 60°C; adding contact lens material to said solution; removing said contact lens material from said solution after a preselected time; and removing unreacted solution from said lens material.

In most tinting procedures, such as those set forth in the aforementioned patents to Su, a solution of an effective amount of a reactive dyestuff is covalently bonded to the monomer units of polymeric lens material. For example, a practitioner may place a preformed contact lens in a tinting solution. In a standard tinting procedure, a contact lens is rinsed with deionized water and placed in a dry vial. Base solution (typically a 10 % Na₃PO₄·12H₂O (aq) solution) is added to the vial, followed by tinting solution. The vial is shaken in a shaker bath, and the lens removed. The lens is rinsed with deionized water and extracted with 10 % glycerine (aq) solution at 80°C for two hours. The lens is once again rinsed with water, then stored in saline. The quaternary ammonium salt catalyst of the present invention is preferably provided in the tinting solution prior to placement of the lens material therein.

A number of ammonium quaternary salts may be used in practicing the present invention, including those of formula I

[A]_{w}[B]_{z}[E]ₜ[G]ᵥ N⁺Q⁻ (I)

wherein each of w, z, t and v is 0-4 and the sum of w+z+t+v is 4, Q⁻ is a counterion selected from HSO₄⁻, F⁻, Cl⁻, Br⁻, I⁻, CH₃COO⁻, OH⁻, BF₄⁻, CH₃-C₆H₄-SO₃⁻, PF₆⁻, and H₂PO₄⁻, and A, B, E and G are each selected from C₁₋₁₈alkyl, preferably C₁₋₇alkyl, more preferably C₁₋₄alkyl; phenyl or phenyl-C₁₋₄alkyl, in which the phenyl ring is unsubstituted or substituted by C₁-C₈alkyl, C₁-C₈alkoxy, halogen, hydroxy, phenoxy, nitro, carboxy, acetamido, phenyl or benzyl; or cycloalkyl having 5-6 ring members; such that a compound of formula I is for example, tri-C₁₋₄alkylbenzylammonium chloride, triethylbenzylammonium chloride, tetraC₁₋₄alkylammonium hydrogen sulfate, especially tetrabutylammonium hydrogen sulfate, phenyltriC₁₋₄alkylammonium chloride, especially phenyl trimethylammonium chloride, benzyltriC₁₋₄alkylammonium chloride, especially benzyltributylammonium chloride, tetraC₁₋₄alkylammonium chloride or bromide, especially tetrabutylammonium chloride or bromide, and tetraethylammonium chloride or bromide.

In general, any polymeric material suitable for use in the preparation of a contact lens can be used in the present invention, so long as at least one of the monomeric components which form the material contains an exoskeletal functional group which can react with a reactive dyestuff molecule. Examples of such functional groups commonly present in contact lens materials are the hydroxyl, amino, amido, thio and carboxy groups, and functional derivatives thereof. Monomers having the above groups which are suitable for use in the invention include without limitation: hydroxyalkyl esters of polymerizable unsaturated acids, such as acrylic, methacrylic, fumaric, maleic, etc.; unsaturated acids per se, such as acrylic, methacrylic, fumaric, maleic, etc.; heterocyclic N-vinyl lactams, such as N-vinyl pyrrolidone, etc.; noncyclic amides such as N-(1,1-dimethyl-3-oxobutyl)-acrylamide; amino alkyl esters of unsaturated acids such as 2-aminoethylacrylate, methacrylate, fumarate, or maleate; mercapto alkyl esters of unsaturated acids such as 2-mercaptoethyl acrylate, methacrylate, fumarate or maleate. Particularly suitable as monomers for this purpose are hydroxylalkyl esters of polymerizable unsaturated acids, such as acrylic, methacrylic, itaconic, fumaric and maleic acids. Among such esters, hydroxyethyl methacrylate (HEMA) has been used quite extensively.

Useful reactive dyes, according to the present invention, include those commonly referred to as "reactive dyes forming ether linkages". These dyes contain reactive groups which react with cellulose to form an ether linkage and are generally described in Fiber-Reactive Dyes, Chapter VI, by W.F. Beech, SAF International, Inc., New York (1970). Incorporated US-A-4,553,775 to Su also sets forth typical examples of commercially available dyes which may be used in accordance with the present invention.

Among the preferred reactive dyestuffs capable of being used in accordance with the present invention are those having the general formulae II or III 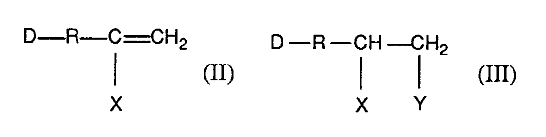
wherein D is the radical of an organic dyestuff; R is a divalent organic electron attracting group capable of causing electron withdrawal of the carbon atoms to which it is attached directly or through a conjugated system, thus activating the same; X is hydrogen or halogen, including F, Cl and Br; and Y is a leaving group; or mixtures thereof.

The radical D may advantageously be the radical of an azo, phthalocyanine, azomethine, nitro or anthraquinone dye.

The divalent group -R- is advantageously bonded directly to an aromatic nuclear carbon of D, or is bonded thereto via an aliphatic group such as an alkylene group, e.g. a lower alkylene group. Most preferably, -R- is directly bonded to a nuclear carbon atom of D.

Suitable divalent R groups include -CO-, -SO₂-, SO-, -NHCO-, -NHSO₂-, -SO₂NH- and the like. Most preferably, -R- is -SO₂-, -SO₂NH-, -CO- or -NHCO-.

When X is halogen, it is most preferably chloro or bromo.

Suitable leaving groups Y include -Cl, -Br, -OH, di-lower alkylamino, 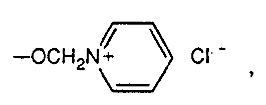
-SO₂-phenyl, -OSO₃⁻Z⁺ where Z⁺ is a cation, -O-SO₃R₁ or -OSO₂R₁ where R₁ in each case is alkyl, aryl, aralkyl or alkaryl. A cation Z⁺ is preferably the cation of an alkali metal, e.g. Na⁺.

Advantageously, where R₁ is alkyl, it is alkyl of 1 to 6 carbon atoms, preferably alkyl of 1 to 4 carbons, including for example, methyl, ethyl, isopropyl, butyl and the like. Where R₁ is alkaryl, it is preferably lower alkyl substituted phenyl, such as tolyl or xylyl, and where R₁ is aralkyl, it is preferably lower alkylenephenyl, such as benzyl or phenethyl.

"Lower" whenever used herein defines groups having up to 7 carbon atoms, preferably up to 4 carbon atoms.

Also, the use of halotriazine dyes, especially chlorotriazine dyes, such as Cibacron® Blue 3R available from Ciba Geigy Corporation, is contemplated by the present invention. These are typically of the formula 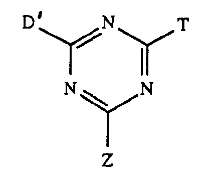
where D' is a radical of an organic dyestuff bound directly to the triazine ring or through a suitable linker, T is a solubilizing moiety, halogen or another D′, and Z is halogen, preferably fluorine, chlorine, or bromine, more preferably fluorine or chlorine, most preferably chlorine. When two halogen groups are present they may be the same as or different from one another. When two D′ groups are present, they may be the same as or different from one another.

The following examples will illustrate the present invention. These examples should be reviewed as illustrative only, without in any way limiting the scope of the instant invention. These examples illustrate that the process for preparing a contact lens tinted over at least a portion of its surface may be improved by adding a quaternary ammonium salt to the tinting solution.

### Example 1:

Two groups of 10 Cibasoft® HEMA contact lenses (available from Ciba Vision Corporation) are tinted. The first group is placed in a tinting solution containing 1 ml of 0.1 % Cibracon® Blue 3R (aq) (a chlorotriazine type dye available from Ciba Geigy Corporation), 1 ml of Na₃PO₄·12H₂O (10 % aq) and 0.1 ml of 5.0 % tetrabutylammonium bromide. The second group is placed in an identical solution except that the tetrabutylammonium bromide is omitted. Both groups are shaken for 30 minutes at 45°C. Each lens is then extracted three times with 10 % glycerine at 80°C for 30 minutes, once in deionized water at 80°C for 30 minutes, and placed in buffered saline at 80°C for 1 hour. The pH of the solution without the quaternary ammonium compound is 12.23, while the pH of the solution with it is 12.18.

After extraction, the lenses from the first group tinted in the presence of the tetrabutylammonium bromide catalyst visibly have substantially more color than those of the second group without the catalyst.

Transmittance of the lens tinted according to the invention is 73 %, of the art lens 87 %, and of a fresh untinted lens 87 %.

### Example 2:

The procedure of example 1 is repeated using a fresh set of lenses, except that the Cibracon® Blue 3R solution concentration is 0.5 %. The lenses are visibly different before extraction and after. The lenses of the first group, which had the catalyst in its tinting solution (pH 12.25), appear very dark blue before extraction, and retain a distinct blue color even after extraction. The lenses of the second group, which had no catalyst in their tinting solution (pH 12.26), appear much lighter than the first group lenses before extraction, and become even lighter after extraction.

Transmittance of the lens tinted according to the invention is 67 %, of the art tinted lens 80 % and of an untinted lens 87 %.

### Example 3:

Two groups (groups I and II) of 5 Softcon® contact lenses (a HEMA/PVP lens available from American Optical Corporation) are tinted according to the above-described standard procedure at 45°C. Group I lenses are placed in a tinting solution (pH 12.20) comprising 2 ml of 0.1 % of Ramazol® (a blue dye solution available from Hoechst Celanese Corporation), 2 ml of 10 % Na₃PO₄·12H₂O (aq), and 0.2 ml of 5 % tetrabutylammonium hydrogen sulfate. The dye solution is prepared by dissolving 0.1 g of a dyestuff having the formula D-SO₂-CH₂-CH₂-O-SO₃Na in 99 ml of water and 1 ml of concentrated HCl. Group II lenses are placed in an identical tinting solution except the tetrabutylammonium hydrogen sulfate is omitted (pH 12.30). The lenses are placed for 1 hour in their respective tinting solution, then extracted with 10 % glycerine (aq) at 80°C for two hours. In comparing the two groups after extraction, it is determined that the lenses of group I, which had the tetrabutylammonium hydrogen sulfate catalyst in their tinting solution, have substantially better coloring than the lenses of group II.

Absorbance according to the Lambert Law for group I lenses is 5.61, while absorbance for group II lenses is 3.00.

### Example 4:

Two groups of 5 Softcon® contact lenses are tinted according to the above-described standard procedure at 45°C. Group I lenses are placed in a tinting solution (pH 12.18) comprising 2 ml of 0.5 % Cibacron® yellow F-G (available from Ciba Geigy Corporation), 2 ml of 10 % Na₃PO₄·12H₂O (aq), and 0.2 ml of 5 % tetrabutylammonium hydrogen sulfate. Group II lenses are placed in an identical tinting solution except the tetrabutylammonium hydrogen sulfate is omitted (pH 12.22). The lenses are soaked for 1 hour in their respective tinting solution, then extracted with 10 % glycerine (aq) at 80°C for two hours. In comparing the two groups after extraction, it is determined that the lenses of group I, which had the tetrabutylammonium hydrogen sulfate catalyst in their tinting solution, have substantially better coloring than the lenses of group II.

Absorbance for group I is 4.64, while for group II absorbance is 2.22.

### Example 5:

Two groups of 5 Cibasoft® HEMA contact lenses each are tinted according to the above-described standard procedure at 45°C. Group I lenses are placed in a tinting solution (pH 12.16) comprising 1 ml of the Ramazol® blue dye solution (set forth in example 3), 1 ml of 10 % Na₃PO₄·12H₂O (aq), and 0.1 ml of 5 % tetrabutylammonium bromide (aq). Group II lenses are placed in an identical tinting solution except that the tetrabutylammonium bromide is omitted (pH 12.21). The lenses are soaked for 30 minutes in their respective tinting solution, washed with deionized water and saline, extracted with 100 ml of 10 % glycerine (aq) at 80°C for two hours, washed again with 100 ml deionized water at 80°C for 1 hour, and placed in 100 ml buffered saline at 80°C for one hour. The lenses are then examined by visible spectrum. A distinct difference is seen between the groups. Group I lenses, which had the catalyst in their tinting solution, are tinted intensely while group II lenses, which had no catalyst in their solution, are tinted only very faintly.

Transmittance for group I lenses is 43 % while for group II lenses transmittance is 73 %.

### Example 6:

Two groups of 5 Cibasoft® HEMA contact lenses each are tinted according to the above-described standard procedure at 45°C. Group I lenses are placed in a tinting solution (pH 12.22) comprising 1 ml of 0.05 % Cibacron® Navy F-G (available from Ciba Geigy Corporation), 1 ml of Na₃PO₄·12H₂O (aq), and 0.1 ml of 5 % tetrabutylammonium bromide (aq). Group II lenses are placed in an identical tinting solution except that the tetrabutylammonium bromide is omitted (pH 12.25). The lenses are placed for 30 minutes in their respective solution, then washed with deionized water and buffered saline solution, extracted in 100 ml of 10 % glycerine (aq) at 80°C for two hours, washed again in 100 ml of deionized water at 80°C for one hour, and placed in 100 ml buffered saline at 80°C for one hour. The tinting results are examined by visible spectrum. The lenses of group I, which were tinted in a solution having the catalyst, possess a blue color. The lenses of group II, which were tinted in a solution without a catalyst, have no visible color.

Transmittance for group I lenses is 62 %, while transmittance for group II lenses is 81 %, and transmittance of fresh untinted lenses is 82 %.

## Claims (Claims for the following Contracting State(s): AT, BE, CH, DE, DK, FR, GB, GR, IT, LI, LU, NL, SE)

1. A process for preparing a contact lens tinted over at least a portion of its surface having the steps of forming a tinting solution comprising a reactive dyestuff and applying said tinting solution to a polymeric hydrogel contact lens material, characterized in that an effective amount of a quaternary ammonium salt is added to said tinting solution before said applying step.

2. The process of claim 1, wherein said quaternary ammonium salt is selected from the group consisting of tri-C₁₋₄alkylbenzylammonium chloride, tetraC₁₋₄alkylammonium hydrogen sulfate, phenyltriC₁₋₄alkylammonium chloride, benzyltriC₁₋₄alkylammonium chloride, and tetraC₁₋₄alkylammonium chloride or bromide.

3. The process of claim 1, wherein said quaternary ammonium salt is triethylbenzylammonium chloride, tetrabutylammonium hydrogen sulfate, phenyl trimethylammonium chloride, benzyltributylammonium chloride, tetrabutylammonium chloride or bromide, or tetraethylammonium chloride or bromide.

4. The process of claim 1 further comprising the steps of maintaining said tinting solution at a temperature from between approximately 30° and 60°C; adding contact lens material to said solution; removing said contact lens material from said solution after a preselected time; and removing unreacted solution from said lens material.

5. The process of claim 1, wherein said tinting solution comprises a reactive dyestuff of the formula II or III 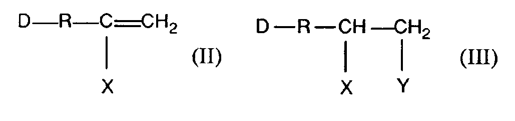 wherein D is the radical of an organic dyestuff; R is a divalent organic electron attracting group capable of causing electron withdrawal of the carbon atoms to which it is attached directly or through a conjugated system, thus activating the same; X is hydrogen or halogen, including F, Cl and Br; and Y is a leaving group; or mixtures thereof.

6. The process of claim 4 wherein said tinting solution comprises a reactive dyestuff of the formula II or III as defined in claim 5.

7. The process of claim 1 or 4, wherein said tinting solution comprises a halotriazine dyestuff.

8. The process of claim 7, wherein said halotriazine dyestuff is a chlorotriazine dyestuff.

9. The process of claim 1, wherein said tinting solution having said quaternary ammonium salt therein has a pH of at least 10 during said applying step.

10. The process of claim 1, wherein said contact lens material is or comprises hydroxyethyl methacrylate.

11. A contact lens produced by a process according to claim 1 wherein the quaternary ammonium salt is selected from a compound of formula I
[A]_{w}[B]_{z}[E]ₜ[G]ᵥ N⁺Q⁻ (I)
wherein each of w, z, t and v is 0-4 and the sum of w+z+t+v is 4, Q⁻ is a counterion selected from HSO₄⁻, F⁻, Cl⁻, Br⁻, I⁻, CH₃COO⁻, OH⁻, BF₄⁻, CH₃-C₆H₄-SO₃⁻, PF₆⁻, and H₂PO₄⁻, and A, B, E and G are each selected from C₁₋₁₈alkyl; phenyl or phenyl-C₁₋₄alkyl, in which the phenyl ring is unsubstituted or substituted by C₁-C₈alkyl, C₁-C₈alkoxy, halogen, hydroxy, phenoxy, nitro, carboxy, acetamido, phenyl or benzyl; and cycloalkyl having 5-6 ring members.

12. A solution for tinting contact lenses, comprising effective amounts of a reactive dyestuff and a quaternary ammonium salt which is selected from a compound of formula I
[A]_{w}[B]_{z}[E]ₜ[G]ᵥ N⁺Q⁻ (I)
wherein each of w, z, t and v is 0-4 and the sum of w+z+t+v is 4, Q⁻ is a counterion selected from HSO₄⁻, F⁻, Cl⁻, Br⁻, I⁻, CH₃COO⁻, OH⁻, BF₄⁻, CH₃-C₆H₄-SO₃⁻, PF₆⁻, and H₂PO₄⁻, and A, B, E and G are each selected from C₁₋₁₈alkyl; phenyl or phenyl-C₁₋₄alkyl, in which the phenyl ring is unsubstituted or substituted by C₁-C₈alkyl, C₁-C₈alkoxy, halogen, hydroxy, phenoxy, nitro, carboxy, acetamido, phenyl or benzyl; and cycloalkyl having 5-6 ring members; with the exception of cetyl trimethylammonium bromide.

13. The use of a solution of claim 12 in a process of claim 1.

## Claims (Claims for the following Contracting State(s): ES)

1. A process for preparing a contact lens tinted over at least a portion of its surface having the steps of forming a tinting solution comprising a reactive dyestuff and applying said tinting solution to a polymeric hydrogel contact lens material, characterized in that an effective amount of a quaternary ammonium salt is added to said tinting solution before said applying step.

2. The process of claim 1, wherein said quaternary ammonium salt is selected from the group consisting of tri-C₁₋₄alkylbenzylammonium chloride, tetraC₁₋₄alkylammonium hydrogen sulfate, phenyltriC₁₋₄alkylammonium chloride, benzyltriC₁₋₄alkylammonium chloride, and tetraC₁₋₄alkylammonium chloride or bromide.

3. The process of claim 1, wherein said quaternary ammonium salt is triethylbenzylammonium chloride, tetrabutylammonium hydrogen sulfate, phenyl trimethylammonium chloride, benzyltributylammonium chloride, tetrabutylammonium chloride or bromide, or tetraethylammonium chloride or bromide.

4. The process of claim 1 further comprising the steps of maintaining said tinting solution at a temperature from between approximately 30° and 60°C; adding contact lens material to said solution; removing said contact lens material from said solution after a preselected time; and removing unreacted solution from said lens material.

5. The process of claim 1, wherein said tinting solution comprises a reactive dyestuff of the formula II or III 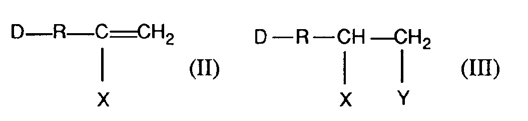 wherein D is the radical of an organic dyestuff; R is a divalent organic electron attracting group capable of causing electron withdrawal of the carbon atoms to which it is attached directly or through a conjugated system, thus activating the same; X is hydrogen or halogen, including F, Cl and Br; and Y is a leaving group; or mixtures thereof.

6. The process of claim 4 wherein said tinting solution comprises a reactive dyestuff of the formula II or III as defined in claim 5.

7. The process of claim 1 or 4, wherein said tinting solution comprises a halotriazine dyestuff.

8. The process of claim 7, wherein said halotriazine dyestuff is a chlorotriazine dyestuff.

9. The process of claim 1, wherein said tinting solution having said quaternary ammonium salt therein has a pH of at least 10 during said applying step.

10. The process of claim 1, wherein said contact lens material is or comprises hydroxyethyl methacrylate.

11. A contact lens produced by a process according to claim 1 wherein the quaternary ammonium salt is selected from a compound of formula I
[A]_{w}[B]_{z}[E]ₜ[G]ᵥ N⁺Q⁻ (I)
wherein each of w, z, t and v is 0-4 and the sum of w+z+t+v is 4, Q⁻ is a counterion selected from HSO₄⁻, F⁻, Cl⁻, Br⁻, I⁻, CH₃COO⁻, OH⁻, BF₄⁻, CH₃-C₆H₄-SO₃⁻, PF₆⁻, and H₂PO₄⁻, and A, B, E and G are each selected from C₁₋₁₈alkyl; phenyl or phenyl-C₁₋₄alkyl, in which the phenyl ring is unsubstituted or substituted by C₁-C₈alkyl, C₁-C₈alkoxy, halogen, hydroxy, phenoxy, nitro, carboxy, acetamido, phenyl or benzyl; and cycloalkyl having 5-6 ring members.

12. A process for the manufacture of a solution for tinting contact lenses, comprising effective amounts of a reactive dyestuff and a quaternary ammonium salt which is selected from a compound of formula I
[A]_{w}[B]_{z}[E]ₜ[G]ᵥ N⁺Q⁻ (I)
wherein each of w, z, t and v is 0-4 and the sum of w+z+t+v is 4, Q⁻ is a counterion selected from HSO₄⁻, F⁻, Cl⁻, Br⁻, I⁻, CH₃COO⁻, OH⁻, BF₄⁻, CH₃-C₆H₄-SO₃⁻, PF₆⁻, and H₂PO₄⁻, and A, B, E and G are each selected from C₁₋₁₈alkyl; phenyl or phenyl-C₁₋₄alkyl, in which the phenyl ring is unsubstituted or substituted by C₁-C₈alkyl, C₁-C₈alkoxy, halogen, hydroxy, phenoxy, nitro, carboxy, acetamido, phenyl or benzyl; and cycloalkyl having 5-6 ring members; with the exception of cetyl trimethylammonium bromide; characterized by conventional mixing of the ingredients.

13. The use of a solution of claim 12 in a process of claim 1.

## Patentansprüche (Patentansprüche für folgende(n) Vertragsstaat(en): AT, BE, CH, DE, DK, FR, GB, GR, IT, LI, LU, NL, SE)

1. Verfahren zur Herstellung einer über zumindest einem Teil ihrer Oberfläche getönten Kontaktlinse, welches die Stufen der Bildung einer einen Reaktivfarbstoff enthaltenden Tönungslösung und das Aufbringen dieser Tönungslösung auf ein polymeres Hydrogel-Kontaktlinsenmaterial umfaßt, dadurch gekennzeichnet, daß eine wirksame Menge eines quaternären Ammoniumsalzes zu der Tönungslösung vor der Stufe des Aufbringens zugesetzt wird.

2. Verfahren gemäß Anspruch 1, worin das quaternäre Ammoniumsalz unter Tri-C₁₋₄-alkylbenzylammoniumchlorid, Tetra-C₁₋₄-alkylammoniumhydrogensulfat, Phenyltri-C₁₋₄-alkylammoniumchlorid, Benzyltri-C₁₋₄-alkylammoniumchlorid und Tetra-C₁₋₄-alkylammoniumchlorid oder -bromid ausgewählt wird.

3. Verfahren gemäß Anspruch 1, worin das quaternäre Ammoniumsalz Triethylbenzylammoniumchlorid, Tetrabutylammoniumhydrogensulfat, Phenyltrimethylammoniumchlorid, Benzyltributylammoniumchlorid, Tetrabutylammoniumchlorid oder -bromid oder Tetraethylammoniumchlorid oder -bromid ist.

4. Verfahren gemäß Anspruch 1, das weiterhin folgende Stufen umfaßt: das Halten der Tönungslösung bei einer Temperatur zwischen etwa 30 °C und 60 °C, die Zugabe des Kontaktlinsenmaterials zu der Lösung, die Entfernung des Kontaktlinsenmaterials aus der Lösung nach einer vorherbestimmten Zeitdauer, und die Entfernung von nicht-umgesetzter Lösung aus dem Linsenmaterial.

5. Verfahren gemäß Anspruch 1 worin die Tönungslösung einen Reaktivfarbstoff der Formeln (II) oder (III) 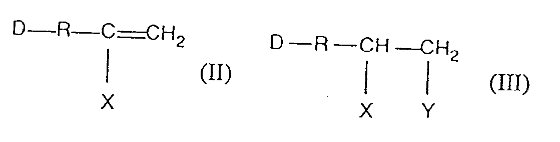 enthält, worin D der Rest eines organischen Farbstoffs ist; R eine zweiwertige organische Elektronen anziehende Gruppe darstellt, die in der Lage ist, Elektronen der Kohlenstoffatome, an die sie gebunden ist, direkt oder über ein konjugiertes System abzuziehen und so diese zu aktivieren, X für Wasserstoff oder Halogen einschließlich F, Cl und Br steht, und Y eine austretende Gruppe ist oder Mischungen hiervon.

6. Verfahren gemäß Anspruch 4, worin die Tönungslösung einen Reaktivfarbstoff der Formeln (II) oder (III), wie in Anspruch 5 definiert, enthält.

7. Verfahren gemäß Anspruch 1 oder 4, worin die Tönungslösung einen Halotriazinfarbstoff enthält.

8. Verfahren gemäß Anspruch 7, worin der Halotriazinfarbstoff ein Chlorotriazinfarbstoff ist.

9. Verfahren gemäß Anspruch 1, worin die das quaternäre Ammoniumsalz enthaltende Tönungslösung einen pH von zumindest 10 während der Stufe des Aufbringens aufweist.

10. Verfahren gemäß Anspruch 1, worin das Kontaktlinsenmaterial Hydroxyethylmethacrylat ist oder dieses enthält.

11. Kontaktlinse, hergestellt nach einem Verfahren gemäß Anspruch 1, worin das quaternäre Ammoniumsalz unter einer Verbindung der Formel (I)
[A]_{w}[B]_{z}[E]ₜ[G]ᵥ N⁺Q⁻ (I)
ausgewählt ist, worin ein jedes von w, z, t und v 0-4 beträgt und die Summe von w + z + t + v = 4 ist, Q⁻ ein Gegenion darstellt, ausgewählt unter HSO₄⁻, F⁻, Cl⁻, Br⁻, I⁻, CH₃COO⁻, OH⁻, BF₄⁻, CH₃-C₆H₄-SO₃⁻, PF₆⁻ und H₂PO₄⁻, und A, B, E und G jeweils ausgewählt sind unter C₁₋₁₈-Alkyl; Phenyl oder Phenyl-C₁₋₄-alkyl, worin der Phenylring unsubstituiert ist oder substituiert durch C₁-C₈-Alkyl, C₁-C₈-Alkoxy, Halogen, Hydroxy, Phenoxy, Nitro, Carboxy, Acetamido, Phenyl oder Benzyl; und Cycloalkyl mit 5-6 Ringgliedern.

12. Lösung für die Tönung von Kontaktlinsen, enthaltend eine wirksame Menge eines Reaktivfarbstoffs und ein quaternäres Ammoniumsalz, das ausgewählt ist unter einer Verbindung der Formel (I)
[A]_{w}[B]_{z}[E]ₜ[G]ᵥ N⁺Q⁻ (I)
worin ein jedes von w, z, t und v 0-4 beträgt und die Summe von w + z + t + v = 4 ist, Q⁻ ein Gegenion darstellt, ausgewählt unter HSO₄⁻, F⁻, Cl⁻, Br⁻, I⁻, CH₃COO⁻, OH⁻, BF₄⁻, CH₃C₆H₄SO₃⁻, PF₆⁻ und H₂PO₄⁻, und A, B, E und G jeweils ausgewählt sind unter C₁₋₁₈-Alkyl; Phenyl oder Phenyl-C₁₋₄-alkyl, worin der Phenylring unsubstituiert ist oder substituiert durch C₁-C₈-Alkyl, C₁-C₈-Alkoxy, Halogen, Hydroxy, Phenoxy, Nitro, Carboxy, Acetamido, Phenyl oder Benzyl; und Cycloalkyl mit 5-6 Ringgliedern; mit der Ausnahme von Cetyltrimethylammoniumbromid.

13. Verwendung einer Lösung gemäß Anspruch 12 in einem Verfahren von Anspruch 1.

## Patentansprüche (Patentansprüche für folgende(n) Vertragsstaat(en): ES)

1. Verfahren zur Herstellung einer über zumindest einem Teil ihrer Oberfläche getönten Kontaktlinse, welches die Stufen der Bildung einer einen Reaktivfarbstoff enthaltenden Tönungslösung und das Aufbringen dieser Tönungslösung auf ein polymeres Hydrogel-Kontaktlinsenmaterial umfaßt, dadurch gekennzeichnet, daß eine wirksame Menge eines quaternären Ammoniumsalzes zu der Tönungslösung vor der Stufe des Aufbringens zugesetzt wird.

2. Verfahren gemäß Anspruch 1, worin das quaternäre Ammoniumsalz unter Tri-C₁₋₄-alkylbenzylammoniumchlorid, Tetra-C₁₋₄-alkylammoniumhydrogensulfat, Phenyltri-C₁₋₄-alkylammoniumchlorid, Benzyltri-C₁₋₄-alkylammoniumchlorid und Tetra-C₁₋₄-alkylammoniumchlorid oder -bromid ausgewählt wird.

3. Verfahren gemäß Anspruch 1, worin das quaternäre Ammoniumsalz Triethylbenzylammoniumchlorid, Tetrabutylammoniumhydrogensulfat, Phenyltrimethylammoniumchlorid, Benzyltributylammoniumchlorid, Tetrabutylammoniumchlorid oder -bromid oder Tetraethylammoniumchlorid oder -bromid ist.

4. Verfahren gemäß Anspruch 1, das weiterhin folgende Stufen umfaßt: das Halten der Tönungslösung bei einer Temperatur zwischen etwa 30 °C und 60 °C, die Zugabe des Kontaktlinsenmaterials zu der Lösung, die Entfernung des Kontaktlinsenmaterials aus der Lösung nach einer vorherbestimmten Zeitdauer, und die Entfernung von nicht-umgesetzter Lösung aus dem Linsenmaterial.

5. Verfahren gemäß Anspruch 1, worin die Tönungslösung einen Reaktivfarbstoff der Formeln (II) oder (III) 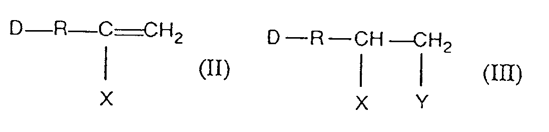 enthält, worin D der Rest eines organischen Farbstoffs ist; R eine zweiwertige organische Elektronen anziehende Gruppe darstellt, die in der Lage ist, Elektronen der Kohlenstoffatome, an die sie gebunden ist, direkt oder über ein konjugiertes System abzuziehen und so diese zu aktivieren, X für Wasserstoff oder Halogen einschließlich F, Cl und Br steht, und Y eine austretende Gruppe ist oder Mischungen hiervon.

6. Verfahren gemäß Anspruch 4, worin die Tönungslösung einen Reaktivfarbstoff der Formeln (II) oder (III), wie in Anspruch 5 definiert, enthält.

7. Verfahren gemäß Anspruch 1 oder 4, worin die Tönungslösung einen Halotriazinfarbstoff enthält.

8. Verfahren gemäß Anspruch 7, worin der Halotriazinfarbstoff ein Chlorotriazinfarbstoff ist.

9. Verfahren gemäß Anspruch 1, worin die das quaternäre Ammoniumsalz enthaltende Tönungslösung einen pH von zumindest 10 während der Stufe des Aufbringens aufweist.

10. Verfahren gemäß Anspruch 1, worin das Kontaktlinsenmaterial Hydroxyethylmethacrylat ist oder dieses enthält.

11. Kontaktlinse, hergestellt nach einem Verfahren gemäß Anspruch 1, worin das quaternäre Ammoniumsalz unter einer Verbindung der Formel (I)
[A]_{w}[B]_{z}[E]ₜ[G]ᵥ N⁺Q⁻ (I)
ausgewählt ist, worin ein jedes von w, z, t und v 0-4 beträgt und die Summe von w + z + t + v = 4 ist, Q⁻ ein Gegenion darstellt, ausgewählt unter HSO₄⁻, F⁻, Cl⁻, Br⁻, I⁻, CH₃COO⁻, OH⁻, BF₄⁻, CH₃-C₆H₄-SO₃⁻, PF₆⁻ und H₂PO₄⁻, und A, B, E und G jeweils ausgewählt sind unter C₁₋₁₈-Alkyl, Phenyl oder Phenyl-C₁₋₄-alkyl, worin der Phenylring unsubstituiert ist oder substituiert durch C₁-C₈-Alkyl; C₁-C₈-Alkoxy, Halogen, Hydroxy, Phenoxy, Nitro, Carboxy, Acetamido, Phenyl oder Benzyl; und Cycloalkyl mit 5-6 Ringgliedern.

12. Verfahren zur Herstellung einer Lösung für die Tönung von Kontaktlinsen, enthaltend eine wirksame Menge eines Reaktivfarbstoffs und ein quaternäres Ammoniumsalz, das ausgewählt ist unter einer Verbindung der Formel (I)
[A]_{w}[B]_{z}[E]ₜ[G]ᵥ N⁺Q⁻ (I)
worin ein jedes von w, z, t und v 0-4 beträgt und die Summe von w + z + t + v = 4 ist, Q⁻ ein Gegenion darstellt, ausgewählt unter HSO₄⁻, F⁻, Cl⁻, Br⁻, I⁻, CH₃COO⁻, OH⁻, BF₄⁻, CH₃C₆H₄SO₃⁻, PF₆⁻ und H₂PO₄⁻, und A, B, E und G jeweils ausgewählt sind unter C₁₋₁₈-Alkyl; Phenyl oder Phenyl-C₁₋₄-alkyl, worin der Phenylring unsubstituiert ist oder substituiert durch C₁-C₈-Alkyl, C₁-C₈-Alkoxy, Halogen, Hydroxy, Phenoxy, Nitro, Carboxy, Acetamido, Phenyl oder Benzyl; und Cycloalkyl mit 5-6 Ringgliedern; mit der Ausnahme von Cetyltrimethylammoniumbromid, gekennzeichnet durch übliches Mischen der Bestandteile.

13. Verwendung einer Lösung gemäß Anspruch 12 in einem Verfahren von Anspruch 1.

## Revendications (Revendications pour l'(les) Etat(s) contractant(s) suivant(s): AT, BE, CH, DE, DK, FR, GB, GR, IT, LI, LU, NL, SE)

1. Procédé pour la préparation d'une lentille de contact teintée sur au moins une portion de sa surface, comportant les étapes de formation d'une solution de coloration comprenant une matière colorante réactive et d'application de la dite solution de coloration à un matériau de lentille de contact en hydrogel polymère, caractérisé en ce qu'une quantité efficace d'un sel d'ammonium quaternaire est ajoutée à la dite solution de coloration avant la dite étape d'application.

2. Procédé selon la revendication 1, dans lequel le dit sel d'ammonium quaternaire est choisi parmi du chlorure de trialkyl(C₁₋₄)benzylammonium, du sulfate acide de tétraalkyl(C₁₋₄)ammonium, du chlorure de phényltri- alkyl(C₁₋₄)ammonium, du chlorure de benzyltrialkyl(C₁₋₄)ammonium et du chlorure ou bromure de tétraalkyl(C₁₋₄)ammonium.

3. Procédé selon la revendication 1, dans lequel le dit sel d'amonium quaternaire est du chlorure de triéthylbenzylammonium, du sulfate acide de tétrabutylammonium, du chlorure de phényltriméthyl- ammonium, du chlorure de benzyltributylammonium, du chlorure ou bromure de tétrabutylammonium ou du chlorure ou bromure de tétraéthylammonium.

4. Procédé selon la revendication 1, comprenant les étapes de maintien de la dite solution de coloration à une température comprise entre approximativement 30° et 60°C; d'addition du matériau de lentille de contact à la dite solution; de séparation du dit matériau de lentille de contact de la dite solution après une durée présélectionnée; et d'élimination de la solution n'ayant pas réagi du dit matériau de lentille.

5. Procédé selon la revendication 1, dans lequel la dite solution de coloration comprend une matière colorante réactive de formule II ou III 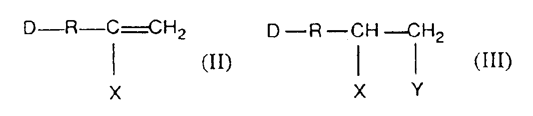 où D est le radical d'une matière colorante organique; R est un groupe électro-attractif organique divalent apte à provoquer une attraction des électrons des atomes de carbone auxquels il est fixé directement ou via un système conjugué, activant ainsi ces atomes; X est l'hydrogène ou un halogène, notamment F, Cl et Br; et Y est un groupe éliminable; ou des mélanges de celles-ci.

6. Procédé selon la revendication 4, dans lequel la dite solution de coloration comprend une matière colorante réactive de formule II ou III telle que définie dans la revendication 5.

7. Procédé selon l'une des revendications 1 ou 4, dans lequel la dite solution de coloration comprend une matière colorante d'halogénotriazine.

8. Procédé selon la revendication 7, dans lequel la dite matière colorante d'halogénotriazine est une matière colorante de chlorotriazine.

9. Procédé selon la revendication 1, dans lequel la dite solution de coloration comportant le dit sel d'ammonium quaternaire a un pH d'au moins 10 pendant la dite étape d'application.

10. Procédé selon la revendication 1, dans lequel le dit matériau de lentille de contact est ou comprend du méthacrylate d'hydroxyéthyle.

11. Lentille de contact produite par un procédé selon la revendication 1, dans lequel le sel d'ammonium quaternaire est choisi parmi les composés de formule I
[A]_{w}[B]_{z}[E]ₜ[G]ᵥN⁺Q⁻ (I)
où chacun des symboles w, z, t et v est 0-4 et la somme de w+z+t+v est 4, Q⁻ est un ion antagoniste (contre-ion) choisi parmi HSO₄⁻, F⁻, Cl⁻, Br⁻, I⁻, CH₃COO⁻, OH⁻, BF₄⁻, CH₃-C₆H₄-SO₃⁻, PF₆⁻, et H₂PO₄⁻, et A, B, E et G sont chacun choisis parmi les groupes alkyle en C₁₋₁₈, de préférence alkyle en C₁₋₇, plus avantageusement alkyle en C₁₋₄; phényle ou phényl-alkyle en C₁₋₄, dans lequel le noyau phényle est non substitué ou substitué par des groupes alkyle en C₁-C₈, alcoxy en C₁-C₈, halogène, hydroxy, phénoxy, nitro, carboxy, acétamido, phényle ou benzyle; et un groupe cycloalkyle ayant 5-6 chaînons.

12. Solution pour la coloration de lentilles de contact, comprenant des quantités efficaces d'une matière colorante réactive et un sel d'ammonium quaternaire qui est choisi parmi les composés de formule I
[A]_{w}[B]_{z}[E]ₜ[G]ᵥN⁺Q⁻ (I)
où chacun des symboles w, z, t et v est 0-4 et la somme de w+z+t+v est 4, Q⁻ est un ion antagoniste (contre-ion) choisi parmi HSO₄⁻, F⁻, Cl⁻, Br⁻, I⁻, CH₃COO⁻, OH⁻, BF₄⁻, CH₃-C₆H₄-SO₃⁻, PF₆⁻, et H₂PO₄⁻, et A, B, E et G sont chacun choisis parmi les groupes alkyle en C₁₋₁₈, de préférence alkyle en C₁₋₇, plus avantageusement alkyle en C₁₋₄; phényle ou phényl-alkyle en C₁₋₄, dans lequel le noyau phényle est non substitué ou substitué par des groupes alkyle en C₁-C₈, alcoxy en C₁-C₈, halogène, hydroxy, phénoxy, nitro, carboxy, acétamido, phényle ou benzyle; et un groupe cycloalkyle ayant 5-6 chaînons; à l'exception du bromure de cétyl triméthylammonium.

13. Utilisation d'une solution selon la revendication 12 dans un procédé selon la revendication 1.

## Revendications (Revendications pour l'(les) Etat(s) contractant(s) suivant(s): ES)

1. Procédé pour la préparation d'une lentille de contact teintée sur au moins une portion de sa surface, comportant les étapes de formation d'une solution de coloration comprenant une matière colorante réactive et d'application de la dite solution de coloration à un matériau de lentille de contact en hydrogel polymère, caractérisé en ce qu'une quantité efficace d'un sel d'ammonium quaternaire est ajoutée à la dite solution de coloration avant la dite étape d'application.

2. Procédé selon la revendication 1, dans lequel le dit sel d'ammonium quaternaire est choisi parmi du chlorure de trialkyl(C₁₋₄)benzylammonium, du sulfate acide de tétraalkyl(C₁₋₄)ammonium, du chlorure de phényltri- alkyl(C₁₋₄)ammonium, du chlorure de benzyltrialkyl(C₁₋₄)- ammonium et du chlorure ou bromure de tétraalkyl(C₁₋₄)ammonium.

3. Procédé selon la revendication 1, dans lequel le dit sel d'amonium quaternaire est du chlorure de triéthylbenzylammonium, du sulfate acide de tétrabutylammonium, du chlorure de phényltriméthyl- ammonium, du chlorure de benzyltributylammonium, du chlorure ou bromure de tétrabutylammonium ou du chlorure ou bromure de tétraéthylammonium.

4. Procédé selon la revendication 1, comprenant les étapes de maintien de la dite solution de coloration à une température comprise entre approximativement 30° et 60°C; d'addition du matériau de lentille de contact à la dite solution; de séparation du dit matériau de lentille de contact de la dite solution après une durée présélectionnée; et d'élimination de la solution n'ayant pas réagi du dit matériau de lentille.

5. Procédé selon la revendication 1, dans lequel la dite solution de coloration comprend une matière colorante réactive de formule II ou III 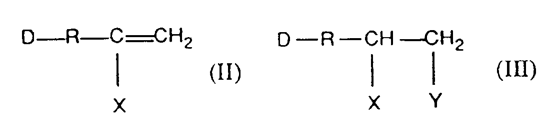 où D est le radical d'une matière colorante organique; R est un groupe électro-attractif organique divalent apte à provoquer une attraction des électrons des atomes de carbone auxquels il est fixé directement ou via un système conjugué, activant ainsi ces atomes; X est l'hydrogène ou un halogène, notamment F, Cl et Br; et Y est un groupe éliminable; ou des mélanges de celles-ci.

6. Procédé selon la revendication 4, dans lequel la dite solution de coloration comprend une matière colorante réactive de formule II ou III telle que définie dans la revendication 5.

7. Procédé selonl'une des revendications 1 ou 4, dans lequel la dite solution de coloration comprend une matière colorante d'halogénotriazine.

8. Procédé selon la revendication 7, dans lequel la dite matière colorante d'halogénotriazine est une matière colorante de chlorotriazine.

9. Procédé selon la revendication 1, dans lequel la dite solution de coloration comportant le dit sel d'ammonium quaternaire a un pH d'au moins 10 pendant la dite étape d'application.

10. Procédé selon la revendication 1, dans lequel le dit matériau de lentille de contact est ou comprend du méthacrylate d'hydroxyéthyle.

11. Lentille de contact produite par un procédé selon la revendication 1, dans lequel le sel d'ammonium quaternaire est choisi parmi les composés de formule I
[A]_{w}[B]_{z}[E]ₜ[G]ᵥN⁺Q⁻ (I)
où chacun des symboles w, z, t et v est 0-4 et la somme de w+z+t+v est 4, Q⁻ est un ion antagoniste (contre-ion) choisi parmi HSO₄⁻, F⁻, Cl⁻, Br⁻, I⁻, CH₃COO⁻, OH⁻, BF₄⁻, CH₃-C₆H₄-SO₃⁻, PF₆⁻, et H₂PO₄⁻, et A, B, E et G sont chacun choisis parmi les groupes alkyle en C₁₋₁₈, de préférence alkyle en C₁₋₇, plus avantageusement alkyle en C₁₋₄; phényle ou phényl-alkyle en C₁₋₄, dans lequel le noyau phényle est non substitué ou substitué par des groupes alkyle en C₁-C₈, alcoxy en C₁-C₈, halogène, hydroxy, phénoxy, nitro, carboxy, acétamido, phényle ou benzyle; et un groupe cycloalkyle ayant 5-6 chaînons.

12. Procédé pour la production d'une solution pour la coloration de lentilles de contact, comprenant des quantités efficaces d'une matière colorante réactive et un sel d'ammonium quaternaire qui est choisi parmi les composés de formule I
[A]_{w}[B]_{z}[E]ₜ[G]ᵥN⁺Q⁻ (I)
où chacun des symboles w, z, t et v est 0-4 et la somme de w+z+t+v est 4, Q⁻ est un ion antagoniste (contre-ion) choisi parmi HSO₄⁻, F⁻, Cl⁻, Br⁻, I⁻, CH₃COO⁻, OH⁻, BF₄⁻, CH₃-C₆H₄-SO₃⁻, PF₆⁻, et H₂PO₄⁻, et A, B, E et G sont chacun choisis parmi les groupes alkyle en C₁₋₁₈, de préférence alkyle en C₁₋₇, plus avantageusement alkyle en C₁₋₄; phényle ou phényl-alkyle en C₁₋₄, dans lequel le noyau phényle est non substitué ou substitué par des groupes alkyle en C₁-C₈, alcoxy en C₁-C₈, halogène, hydroxy, phénoxy, nitro, carboxy, acétamido, phényle ou benzyle; et un groupe cycloalkyle ayant 5-6 chaînons; à l'exception du bromure de cétyl triméthylammonium; caractérisé en ce qu'on mélange de façon conventionnelle les constituants.

13. Utilisation d'une solution selon la revendication 12 dans un procédé selon la revendication 1.
